# EUROPEAN PATENT APPLICATION

(11) **EP 2 456 202 A1**
(43) Date of publication of application: **23.05.2012**
(21) Application number: 10809510.0
(22) Date of filing: 25.06.2010
(51) Int. Cl.: H04N 7/173

(54) **SET TOP BOX DEVICE, SYSTEM AND METHOD FOR REALIZING INTERNET PROTOCOL TELEVISION (IPTV) CHANNEL RECORDING AND PLAYING**

(30) Priority: 19.08.2009 CN 200910162924
(71) Applicant: ZTE Corporation, Shenzhen, Guangdong 518057 (CN)
(72) Inventor: ZHAO, Lei, Shenzhen Guangdong 518057 (CN); ZHOU, Peng, Shenzhen Guangdong 518057 (CN)
(74) Representative: Swindell & Pearson Limited
(86) International application number: PCT/CN2010/074444
(87) International publication number: WO 2011/020377

(57) **Abstract**

A set top box device, system and method for realizing interactive IPTV channel recording and playing are disclosed in the invention. The set top box device is set as: saving the channels and the playing address information of the channel downloaded from an Electronic Program Guide (EPG) server; when receiving a user channel recording and/or channel switching command, according to the channel selected by the user, acquiring the corresponding playing address, and acquiring from a media server the program media stream of the channel corresponding to the playing address to record or play. When the user needs to record and play simultaneously in the same procedure, the set top box device switches the recording to the background, and performs the playing in the foreground. The invention realizes humanized channel recording function, solves the problem that in the traditional video stream recording mode, the user, while recording, cannot switch the channel to watch the programs of other channels, so as to enhance the user experience.

## Description

### Technical Field

The present invention relates to the Internet Protocol Television (IPTV) technology, and in particular, to a set top box apparatus, a system and a method for implementing IPTV recording and playing.

### Background of the Related Art

IPTV is a kind of video media services, and along with the continuous growing of the technology and the deep development of the service, the number of its user is continuously increasing. IPTV not only can provide electronic program guide service through rich and colorful pages, but also can provide services, such as video on demand, playing back, recording, information browsing and gaming, etc.. Besides, IPTV has various interactive functions.

Now, in the field of IPTV technology, the study on technology of one path video stream recording has already obtained a great breakthrough, for example, channel recording. However, the recording mode of one path video stream has the following disadvantages: when a user is recording the video program of a certain channel, and if the user intends to watch the video program of another channel, the user can switch the programs of other channels only when firstly stopping recording the video program of the current channel, and this mode influences the user's experience to some degree.

### Summary of the Invention

The technical problem to be solved in the present invention is to provide a method, a system and an apparatus for implementing IPTV channel recording and playing, which enable the user to browse the programs of other channels at the same time when recording the live channel program.

In order to solve the above technical problem, the present invention provides a set top box apparatus for implementing IPTV channel recording and playing, and the apparatus is configured to: store information of channels and playing addresses of the channels downloaded from an Electronic Program Guide (EPG) server; and when receiving a channel recording and/or channel switching command of a user, acquire a corresponding playing address according to a channel selected by the user and acquire a media stream of a channel program corresponding to the playing address from a media server for recording or playing; and
the apparatus is further configured to: set the recording to be performed in a background and set the playing to be performed in a foreground when the user needs to perform recording and playing simultaneously in a same procedure.

The apparatus comprises: a key reception module, a browser processing module, that is, a BW module, a media playing and recording module, and a script module, that is, a JS module, downloaded from the EPG server, wherein,
the key reception module is configured to: send a received user command to the JS module and the BW module at the same time, wherein the user command at least includes channel recording and channel switching commands;
the JS module is configured to: store the carried information of the channels and the corresponding playing addresses in a downloading place after being downloaded; and define one or more objects when receiving the channel recording and/or the channel switching command, and send a channel number of a corresponding channel in the defined objects;
the BW module is configured to: invoke the media playing and recording module for the objects defined by the JS module, and if receiving the channel switching command and determining that there is a channel being recorded currently, then transfer the channel switching command and a foreground recording/playing switching command to the media playing and recording module;
the media playing and recording module is configured to: switch the channel recording which is being performed in the foreground by a media player of the channel to the background to be performed after receiving the foreground recording/playing switching command, and newly allocate media player resources and media decoder resources for the objects newly defined by the JS module.

The user command further includes a channel playing command;
the BW module is further configured to: transfer the channel playing command to the media playing and recording module if further receiving the channel playing channel after receiving the channel switching command and determining that there is a channel being recorded currently;
the media playing and recording module is further configured to: obtain the corresponding playing address according to the channel number of a current channel contained in the channel playing command, read a media stream of a program of the current channel from the media server according to the playing address, and start the newly allocated media player to play media stream data of the current channel decoded by a newly allocated media decoder in the foreground.

The user command further includes a channel playing command;
the BW module is further configured to: transfer the playing switching command containing the channel number of a current channel to the media playing and recording module if receiving the channel switching and playing command in a process of executing the playing command and determining that there is no channel being recorded currently;
the media playing and recording module is further configured to: firstly stop playing media stream data of a previous channel by the media player in the foreground after receiving the playing switching command, obtain a corresponding playing address according to the channel number of a current channel, read a media stream of a program of the current channel from the media server according to the playing address, and start the media player to play media stream data of the current channel decoded by a media decoder in the foreground.

The user command further includes a channel playing command;
the BW module is further configured to: transfer a background recording command containing the channel number of a current channel to the media playing and recording module if receiving the channel recording command in a process of executing the channel playing command;
the media playing and recording module is further configured to: continue to play media stream data of a previous channel by the media player in the foreground after receiving the background recording command, obtain the corresponding playing address according to the channel number in the background recording command, read the media stream of a program of the current channel from the media server according to the playing address, and start another media player to record the media stream of the current channel in the background.

The apparatus further comprises a bottom layer interface, wherein,
the JS module is configured to: send the channel number in the defined objects through the bottom layer interface;
the media playing and recording module is further configured to: obtain the channel number from the bottom layer interface, and read the media stream of a program of a current channel from the media server through the bottom layer interface.

In order to solve the above technical program, the present invention further provides a system for implementing Internet Protocol Television (IPTV) channel recording and playing, and the system comprises an Electronic Program Guide (EPG) server, a media server and a set top box apparatus, wherein,
the EPG server is configured to: store and manage information of channels and playing addresses of the channels;
the media server is configured to: store media streams corresponding to channel programs according to the playing addresses of the channels;
the set top box apparatus is configured to: store the information of the channels and the corresponding playing addresses downloaded from the EPG server; when receiving a channel recording and/or channel switching command of a user, acquire a corresponding playing address according to a channel selected by the user and acquire a media stream of a channel program corresponding to the playing address from the media server for recording or playing; and when the user needs to record and play simultaneously in a same procedure, set the recording to a background and set the playing in a foreground.

The set top box apparatus comprises a key reception module, a browser processing module, that is, a BW module, a media playing and recording module, and a script module, that is, a JS module, downloaded from the EPG server, wherein,
the key reception module is configured to: send a received user command to the JS module and the BW module at the same time, wherein the user command at least includes channel recording, channel switching and channel playing commands;
the JS module is configured to: store the carried information of the channels and the corresponding playing addresses in a downloading place after being downloaded; and define one or more objects when receiving the channel recording and/or the channel switching command, and send a channel number of a corresponding channel in the defined objects;
the BW module is configured to: invoke the media playing and recording module for the objects defined by the JS module, and if receiving the channel switching and channel switching commands and determining that there is a channel being recorded currently, then transfer the channel playing command and a foreground recording/playing switching command to the media playing and recording module;
the media playing and recording module is configured to: switch the channel recording which is being performed in the foreground by a media player to the background to be performed after receiving the channel playing command and the foreground recording/playing switching command, and newly allocate media player resources and media decoder resources for the objects newly defined by the JS module, obtain the corresponding playing address according to the channel number of a current channel contained in the channel playing command, read a media stream of a program of the current channel from the media server according to the playing address, and start the newly allocated media player to play media stream data of the current channel decoded by a newly allocated media decoder in the foreground.

The BW module is further configured to: transfer a background recording command containing the channel number of a current channel to the media playing and recording module if receiving the channel recording command in a process of executing the channel playing command;
the media playing and recording module is further configured to: continue to play media stream data of a previous channel by the media player in the foreground after receiving the background recording command, obtain the corresponding playing address according to the channel number in the background recording command, read the media stream of a program of the current channel from the media server according to the playing address, and start another media player to record the media stream of the current channel in the background.

In order to solve the above technical program, the present invention further provides a method for implementing Internet Protocol Television (IPTV) channel recording and playing, and the method comprises:
a set top box apparatus storing information of channels and corresponding playing addresses downloaded from an Electronic Program Guide (EPG) server; when receiving a channel recording and/or channel switching and playing command of a user, allocating a media playing resource for a corresponding channel, acquiring a corresponding playing address according to a channel selected by the user, and acquiring a media stream of a channel program corresponding to the playing address from a media server through the media playing resource for recording or playing; and
when the user needs to record and play simultaneously in a same procedure, the set top box apparatus setting the recording to be performed in a background, and setting the playing to be performed in a foreground.

When the set top box apparatus receives the channel switching and channel playing command, the method comprises: if determining that there is a channel being recorded currently, then switching the channel recording that is being performed in the foreground by the media playing resource to be performed in the background, and allocating a media playing resource for a current channel selected by the user, acquiring a corresponding playing address according to the current channel, and playing the media stream corresponding to the channel program in the playing address acquired from the media server in the foreground through the newly allocated media playing resource.

When the set top box apparatus receives the channel recording command, the method comprises: if determining that there is a channel being played currently, then continuing to play media stream data of a previous channel by the media playing resource in the foreground, and allocating a media playing resource for the current channel selected by the user, obtaining the corresponding playing address according to the current channel, reading the media stream of the current channel program from the media server according to the playing address, and starting the newly allocated media playing resource to record the media stream of the current channel in the background.

The set top box apparatus, system and method for implementing IPTV channel recording and playing, when the user has a requirement for watching the programs of other channels at the same time when recording the live channel program, play the program of the channel selected by the user in the foreground through switching the recording to the background, thereby implementing the humanized channel recording function, and solving the problem that the traditional video stream recording mode cannot support the user to switch the channel to watch the programs of other channels at the same time when recording, which increases the user's experience.

### Brief Description of Drawings

FIG. 1 is a structure diagram of a system for implementing IPTV channel recording and playing according to an embodiment of the present invention;
FIG. 2 is a signal flow diagram of a set top box apparatus for implementing IPTV channel recording and playing according to the present invention;
FIG. 3 is a flow chart of a method for implementing IPTV channel recording and playing according to an embodiment of the present invention.

### Preferred Embodiments of the Present Invention

The present invention provides a method, a system and an apparatus for implementing IPTV channel recording and playing, of which the inventive idea is to use the Local Personal Video Record (LPVR) technology to implement the playing and recording of multiple paths of video streams at the same time; and the user can perform the channel recording through the remote controller when watching the common channel program, and the user is allowed to switch the channel to watch other programs when recording a program for the user in the background. If the LPVR technology can be implemented in IPTV, it will certainly bring a brand new experience to the user.

The technical scheme of the present invention is described in detail with reference to the accompanying drawings and in combination with preferable embodiment hereinafter. The following embodiments are only the illustration and explanation of the present invention and are not intended to limit the technical scheme of the present invention.

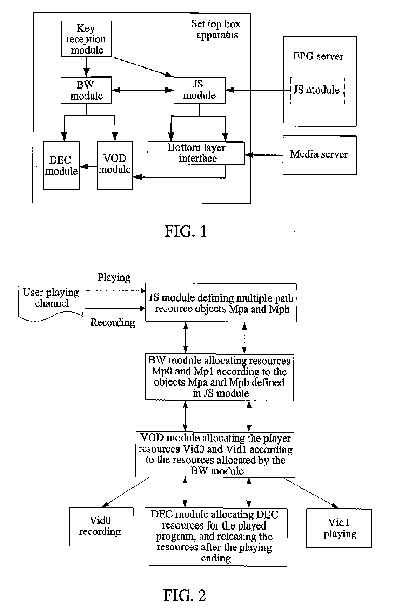

FIG. 1 is a structure diagram of a system for implementing IPTV channel recording and playing according to an embodiment of the present invention. The system comprises a set top box (embodiment) of the present invention, an Electronic Program Guide (EPG) server and a media server, wherein:
the EPG server is used to: store and manage a script module (that is, a JS module), and information of channels and playing addresses of the channels;
the media server is used to: store media streams of channel programs according to the playing addresses; and
the set top box apparatus is used to: download the information of a channel and playing address thereof from the EPG server and store the information of channels and playing addresses thereof; when receiving a user channel recording and/or channel switching command, acquire the corresponding playing address according to a channel selected by a user and acquire the media stream of the corresponding channel program from the media server for recording or playing according to the playing address; and when the user needs to perform the channel recording and channel playing simultaneously in a same procedure, set the channel recording to be performed in the background and set the channel playing to be performed in the foreground.

Here, "setting the channel playing to be performed in the foreground" refers that the user will feel the channel playing which is being performed through his/her own sense organ; similarly, "setting the channel recording to be performed in the background" refers that the user will not feel the channel recording which is being performed.

The set top box apparatus shown in FIG. 1 is an embodiment of the set top box apparatus for implementing IPTV channel recording and playing provided by the present invention, and the set top box apparatus comprises a key reception module, a browser processing module (that is, a BW module), a media playing control module (that is, a VOD module), a media decoding and display module (that is, a DEC module) and a script module (that is, a JS module) downloaded from the EPG server; wherein,
the key reception module is configured to: send a received user command to the JS module and the BW module at the same time, wherein the user command at least includes channel recording, channel switching and playing, stopping, and pausing commands;
the JS module is configured to: define one or more media playing objects when receiving the channel recording and/or channel switching command, and send the channel number of the corresponding channel in the defined objects;
the BW module is configured to: respectively invoke the VOD module and the DEC module for one or more objects defined by the JS module and transfer the corresponding user command;
the VOD module is configured to: allocate the media player resources for the corresponding one or more objects under the invoke of the BW module, obtain the playing address according to the channel number of the corresponding channel, and transfer the media stream of the channel program read from the media server in the playing state to the DEC module, control the media player to play, stop or pause the media stream data decoded by the DEC module according to the user command, or control the media player to record, stop or pause the media stream;
the DEC module is configured to: allocate the media decoder resource for the objects of the playing program under the invoke of the BW module, and decode the media stream data of the current channel transferred by the VOD module through the media decoder.

The BW module is further configured to: further transmit a foreground recording/playing switching command when invoking the VOD module if a channel switching command is received in the process of executing the channel recording command; and invoke VOD module if a playing command is further received after receiving the channel switching command in the process of executing the channel recording command;
the VOD module is further configured to: switch the channel recording which is performed in the foreground by the media player to the background to be performed after receiving the foreground recording/playing switching command, and newly allocate a media player for the newly defined objects; afterwards, transfer the media stream of the current channel program read from the media server to the DEC module after receiving the playing command, and play the media stream data of the current channel decoded by the DEC module in the foreground.

The BW module is further configured to: further transfer a playing switching command when invoking the VOD module if a channel switching and playing command is received in the process of executing the playing command and it is determined that there is no channel being recorded currently;
the VOD module is further configured to: firstly stop playing the media stream data of the previous channel in the foreground by the media player after receiving the playing switching command, transfer the media stream of the current channel program selected by the user read from the media server to the DEC module, and start the media player to play the media stream data of the current channel decoded by the DEC module in the foreground.

In another embodiment, the VOD module and the DEC module can be combined in a media playing and recording module which is configured to, under the invoke of the BW module, acquire the corresponding playing address according to the channel selected by the user and acquire the media stream of the corresponding channel program from the media server according to the playing address for recording or playing; and when the user needs to perform the channel recording and channel playing simultaneously in a same procedure, set the channel recording to be performed in the background, and set the channel playing to be performed in the foreground.

The BW module is further configured to: transfer a background recording command containing the channel number of the current channel to the media playing and recording module if the channel recording command is received in the process of executing the playing command;
the media playing and recording module is further configured to: continue to play the media stream data of the previous channel in the foreground by the media player after receiving this background recording command, obtain the corresponding playing address according to the channel number in the background recording command, read the media stream of the current channel program from the media server according to the playing address, and allocate and start another media player to record the media stream data of the current channel in the background.

The corresponding relationship directly with regard to multiple paths of resources of each module in the set top box shown in FIG. 1 is shown in FIG. 2:
the JS module can define a plurality of MediaPlayer objects. 2 objects are taken as an example, wherein one is mediaplayer_a (Mpa for short), the other is mediaplayer_b (Mpb for short);
the BW module allocates one resource for each object defined by the JS module, for example, allocating Mp0 for Mpa, and allocating Mp1 for Mpb; when the BW module invokes the VOD module and the DEC module, Mp0 and Mp1 are transferred to the VOD module and the DEC module respectively;
the VOD module respectively allocates one path of corresponding media player for Mp0 and Mp1 according to the Mp0 and Mp1 resources, and uses the fixed corresponding way. Each path media player firstly starts the DEC module to allocate the corresponding media decoder resource for the channel when starting the channel program playing once, and transfers the media stream of the current channel program read from the media server to the media decoder;
the DEC module allocates the media decoder resource for the played program channel, and releases the media decoder when the program playing ends.

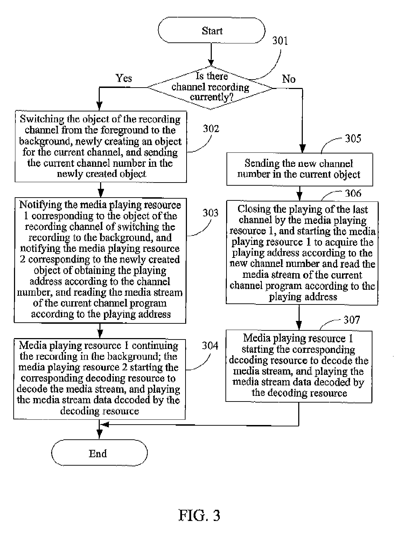

FIG. 3 is a flow chart of a method for implementing IPTV channel recording and playing according to an embodiment of the present invention. The procedure is executed by the set top box after receiving the switching channel command of the user, and the procedure comprises the following steps:
301, it is judged whether there is channel recording currently, and if yes, 302 is performed, or else 305 is performed;
302, the object of recording channel (named as Mpa) is switched from the foreground to the background, an object (named as Mpb) is newly created for the current channel, and the channel number of the current channel is sent in the newly created object Mpb;
303, the resource (named as Mp0) corresponding to Mpa notifies the corresponding media playing resource 1 (named as Vid0) of switching the recording to the background, and the resource (named as Mp1) corresponding to Mpb notifies the media playing resource 2 (named as Vid1) of obtaining the playing address of the corresponding channel according to the channel number and reading the media stream of the current channel program according to the playing address;
304, Vid0 continues the recording in the background; Vid1 starts the corresponding decoding resource to decode the media stream, and plays the media stream data decoded by the decoding resource; the procedure ends.
305, the new channel number is sent in the current playing object;
306, Mp0 closes playing the previous channel by the Vid0, and starts Vid0 to acquire the playing address according to the new channel number and read the media stream of the current channel program according to the playing address;
307, Vid0 starts the corresponding decoding resource to decode the media stream, and plays the media stream data decoded by the decoding resource; the procedure ends.

The technical scheme of the present invention can implement to execute the channel switching function according to the channel switching command of the user at the same time when recording the live channel, which facilitates the user to watch other interested program in the process of program recording, thus improving the user's experience, and is another embodiment of the advantage of the IPTV relative to the traditional television in the watching way.

The above description is only the preferred embodiments of the present invention and is not intended to limit the scope of the present invention. For those skilled in the art, the present invention can have a variety of modifications and variations. And all of these modifications, equivalent substitutions and the improvements without departing from the spirit and essence of the present invention should fall into the protection scope of the appended claims of the present invention.

### Industrial Applicability

The set top box apparatus, system and method for implementing IPTV channel recording and playing of the present invention, when the user has a requirement for watching the programs of other channels at the same time when recording the live channel program, play the program of the channel selected by the user in the foreground through switching the recording to the background, thereby implementing the humanized channel recording function, and solving the problem that the traditional video stream recording mode cannot support the user to switch the channel to watch the programs of other channels at the same time when recording, which increases the user's experience.

## Claims

1. A set top box apparatus for implementing Internet Protocol Television (IPTV) channel recording and playing, being configured to:
store information of channels and playing addresses of the channels downloaded from an Electronic Program Guide (EPG) server; and
when receiving a channel recording and/or channel switching command of a user, acquire a corresponding playing address according to a channel selected by the user and acquire a media stream of a channel program corresponding to the playing address from a media server for recording or playing; and
the apparatus being further configured to: set the recording to be performed in a background and set the playing to be performed in a foreground when the user needs to perform recording and playing simultaneously in a same procedure.

2. The apparatus according to claim 1, comprising; a key reception module, a browser processing module, that is, a BW module, a media playing and recording module, and a script module, that is, a JS module, downloaded from the EPG server, wherein,
the key reception module is configured to: send a received user command to the JS module and the BW module at the same time, wherein the user command at least includes channel recording and channel switching commands;
the JS module is configured to: store the carried information of the channels and the corresponding playing addresses in a downloading place after being downloaded; and define one or more objects when receiving the channel recording and/or the channel switching command, and send a channel number of a corresponding channel in the defined objects;
the BW module is configured to: invoke the media playing and recording module for the objects defined by the JS module, and if receiving the channel switching command and determining that there is a channel being recorded currently, then transfer the channel switching command and a foreground recording/playing switching command to the media playing and recording module;
the media playing and recording module is configured to: switch the channel recording which is being performed in the foreground by a media player of the channel to the background to be performed after receiving the foreground recording/playing switching command, and newly allocate media player resources and media decoder resources for the objects newly defined by the JS module.

3. The apparatus according to claim 2, wherein the user command further includes a channel playing command;
the BW module is further configured to: transfer the channel playing command to the media playing and recording module if further receiving the channel playing channel after receiving the channel switching command and determining that there is a channel being recorded currently;
the media playing and recording module is further configured to: obtain the corresponding playing address according to the channel number of a current channel contained in the channel playing command, read a media stream of a program of the current channel from the media server according to the playing address, and start the newly allocated media player to play media stream data of the current channel decoded by a newly allocated media decoder in the foreground.

4. The apparatus according to claim 2, wherein the user command further includes a channel playing command;
the BW module is further configured to: transfer the playing switching command containing the channel number of a current channel to the media playing and recording module if receiving the channel switching and playing command in a process of executing the playing command and determining that there is no channel being recorded currently;
the media playing and recording module is further configured to: firstly stop playing media stream data of a previous channel by the media player in the foreground after receiving the playing switching command, obtain a corresponding playing address according to the channel number of a current channel, read a media stream of a program of the current channel from the media server according to the playing address, and start the media player to play media stream data of the current channel decoded by a media decoder in the foreground.

5. The apparatus according to claim 2, wherein the user command further includes a channel playing command;
the BW module is further configured to: transfer a background recording command containing the channel number of a current channel to the media playing and recording module if receiving the channel recording command in a process of executing the channel playing command;
the media playing and recording module is further configured to: continue to play media stream data of a previous channel by the media player in the foreground after receiving the background recording command, obtain the corresponding playing address according to the channel number in the background recording command, read the media stream of a program of the current channel from the media server according to the playing address, and start another media player to record the media stream of the current channel in the background.

6. The apparatus according to any one of claims 2 to 5, further comprising a bottom layer interface, wherein,
the JS module is configured to: send the channel number in the defined objects through the bottom layer interface;
the media playing and recording module is further configured to: obtain the channel number from the bottom layer interface, and read the media stream of a program of a current channel from the media server through the bottom layer interface.

7. A system for implementing Internet Protocol Television (IPTV) channel recording and playing, comprising an Electronic Program Guide (EPG) server, a media server and a set top box apparatus, wherein,
the EPG server is configured to: store and manage information of channels and playing addresses of the channels;
the media server is configured to: store media streams corresponding to channel programs according to the playing addresses of the channels;
the set top box apparatus is configured to: store the information of the channels and the corresponding playing addresses downloaded from the EPG server; when receiving a channel recording and/or channel switching command of a user, acquire a corresponding playing address according to a channel selected by the user and acquire a media stream of a channel program corresponding to the playing address from the media server for recording or playing; and when the user needs to record and play simultaneously in a same procedure, set the recording to a background and set the playing in a foreground.

8. The system according to claim 7, wherein the set top box apparatus comprises a key reception module, a browser processing module, that is, a BW module, a media playing and recording module, and a script module, that is, a JS module, downloaded from the EPG server, wherein,
the key reception module is configured to: send a received user command to the JS module and the BW module at the same time, wherein the user command at least includes channel recording, channel switching and channel playing commands;
the JS module is configured to: store the carried information of the channels and the corresponding playing addresses in a downloading place after being downloaded; and define one or more objects when receiving the channel recording and/or the channel switching command, and send a channel number of a corresponding channel in the defined objects;
the BW module is configured to: invoke the media playing and recording module for the objects defined by the JS module, and if receiving the channel switching and channel switching commands and determining that there is a channel being recorded currently, then transfer the channel playing command and a foreground recording/playing switching command to the media playing and recording module;
the media playing and recording module is configured to: switch the channel recording which is being performed in the foreground by a media player to the background to be performed after receiving the channel playing command and the foreground recording/playing switching command, and newly allocate media player resources and media decoder resources for the objects newly defined by the JS module, obtain the corresponding playing address according to the channel number of a current channel contained in the channel playing command, read a media stream of a program of the current channel from the media server according to the playing address, and start the newly allocated media player to play media stream data of the current channel decoded by a newly allocated media decoder in the foreground.

9. The system according to claim 8, wherein,
the BW module is further configured to: transfer a background recording command containing the channel number of a current channel to the media playing and recording module if receiving the channel recording command in a process of executing the channel playing command;
the media playing and recording module is further configured to: continue to play media stream data of a previous channel by the media player in the foreground after receiving the background recording command, obtain the corresponding playing address according to the channel number in the background recording command, read the media stream of a program of the current channel from the media server according to the playing address, and start another media player to record the media stream of the current channel in the background.

10. A method for implementing Internet Protocol Television (IPTV) channel recording and playing, comprising:
a set top box apparatus storing information of channels and corresponding playing addresses downloaded from an Electronic Program Guide (EPG) server; when receiving a channel recording and/or channel switching and playing command of a user, allocating a media playing resource for a corresponding channel, acquiring a corresponding playing address according to a channel selected by the user, and acquiring a media stream of a channel program corresponding to the playing address from a media server through the media playing resource for recording or playing; and
when the user needs to record and play simultaneously in a same procedure, the set top box apparatus setting the recording to be performed in a background, and setting the playing to be performed in a foreground.

11. The method according to claim 10, wherein,
when the set top box apparatus receives the channel switching and channel playing command, the method comprises:
if determining that there is a channel being recorded currently, then switching the channel recording that is being performed in the foreground by the media playing resource to be performed in the background, and allocating a media playing resource for a current channel selected by the user, acquiring a corresponding playing address according to the current channel, and playing the media stream corresponding to the channel program in the playing address acquired from the media server in the foreground through the newly allocated media playing resource.

12. The method according to claim 10, wherein,
when the set top box apparatus receives the channel recording command, the method comprises:
if determining that there is a channel being played currently, then continuing to play media stream data of a previous channel by the media playing resource in the foreground, and allocating a media playing resource for the current channel selected by the user, obtaining the corresponding playing address according to the current channel, reading the media stream of the current channel program from the media server according to the playing address, and starting the newly allocated media playing resource to record the media stream of the current channel in the background.
